Europäisches Patentamt

European Patent Office

Office européen des brevets

(19)

(11) Veröffentlichungsnummer: **0 502 421 A2**

(12) # EUROPÄISCHE PATENTANMELDUNG

(21) Anmeldenummer: **92103351.0**

(22) Anmeldetag: **27.02.92**

(51) Int. Cl.5: **B23K 9/32**, B23K 9/173

(30) Priorität: **05.03.91 CH 657/91**

(43) Veröffentlichungstag der Anmeldung:
**09.09.92 Patentblatt 92/37**

(84) Benannte Vertragsstaaten:
**AT BE CH DE DK ES FR GB IT LI NL PT SE**

(71) Anmelder: **GIMOTA AG**
**Wehntalerstrasse 5**
**CH-8042 Zürich(CH)**

(72) Erfinder: **Kunz, Erwin**
**Goldschmiedstr. 11**
**CH-8102 Oberengstringen(CH)**

(74) Vertreter: **Blum, Rudolf Emil Ernst**
**c/o E. Blum & Co Patentanwälte Vorderberg 11**
**CH-8044 Zürich(CH)**

(54) **Rauchabsaugvorrichtung an einem Schweissbrenner.**

(57) Die Rauchabsaugvorrichtung an einem MIG-Schweissbrenner besitzt eine Absaugdüse (3). Diese ist mit einem ringförmigen Vorsprung (4) versehen, hinter welchem eine Drucksenke ausgebildet ist, welche in radialer Richtung wirkt. Die Drucksenke wird von einem Rohrstück (10) mit Oeffnungen (9) gebildet. Darauf verschiebbar ist eine Regulierhülse (14) angeordnet zur Einstellung der Absaugcharakteristik. Mit dieser Vorrichtung gelingt eine umfassende Absaugung des beim Schweissvorgang entstehenden Rauchs ohne Störung der Schutzgaswirkung im Bereich der Schweissstelle.

Fig.1

EP 0 502 421 A2

Die Erfindung betrifft eine Rauchabsaugvorrichtung an einem Schweissbrenner für das Lichtbogenschweissen unter Schutzgas, wobei der Schweissbrenner ein zentrales Führungsorgan für einen Schweissdraht aufweist, das an seinem vorderen Ende von einer Gasdüse umgeben ist, durch welche die Schutzgaszuführung erfolgt und wobei über der Gasdüse eine Saugdüse zum Wegführen von Rauch und Gas aus dem Bereich der Schweissstelle vorgesehen ist.

Schweissbrenner dieser Art sind unter der Bezeichnung MIG-Schweissbrenner bekannt. Ein Schweissdraht bildet die Elektrode, zwischen der und dem Werkstück ein Lichtbogen erzeugt wird, wobei der Schweissdraht abschmilzt und fortlaufend nachgeführt wird. Der Lichtbogen brennt unter einem gesondert zugeführten Schutzgas. Das Abschmelzen des Schweissdrahts ist mit erheblicher Rauchentwicklung verbunden. Der Rauch verteilt sich mit dem entweichenden Schutzgas in die Umgebung und muss aus arbeitshygienischen Gründen abgesaugt werden. Die bisher bekannten Absaugungen wiesen den Nachteil auf, dass je nach der Lage des Schweissbrenners ein erheblicher Teil des Rauchs nicht in die Absaugung gelangte. Wurde die Saugleistung erhöht, so verbesserte sich zwar die Absaugung, aber es wurde zugleich auch der Schutzgasmantel an der Schweissstelle gestört, was zu einer schlechten Qualität der Schweissnaht führen konnte.

Es stellt sich auf diesem Hintergrund die Aufgabe, eine Rauchgasabsaugung der eingangs erwähnten Art so auszugestalten, dass der beim Schweissen entstehende Rauch in jeder Lage des Schweissbrenners möglichst vollständig abgesaugt wird, ohne dass die Wirkung des Schutzgases gestört wird.

Die Lösung dieser Aufgabe erfolgt mit den Massnahmen, die in den Patentansprüchen definiert sind.

Anhand der Zeichnung wird ein Ausführungsbeispiel der Erfindung näher erläutert. Darin zeigen:

Figur 1 eine Gesamtansicht des Schweissbrenners mit der erfindungsgemässen Absaugung;
Figur 2 eine Detailansicht der Absaugdüse, und
Figur 3 eine Darstellung der beobachteten Strömungsverhältnisse.

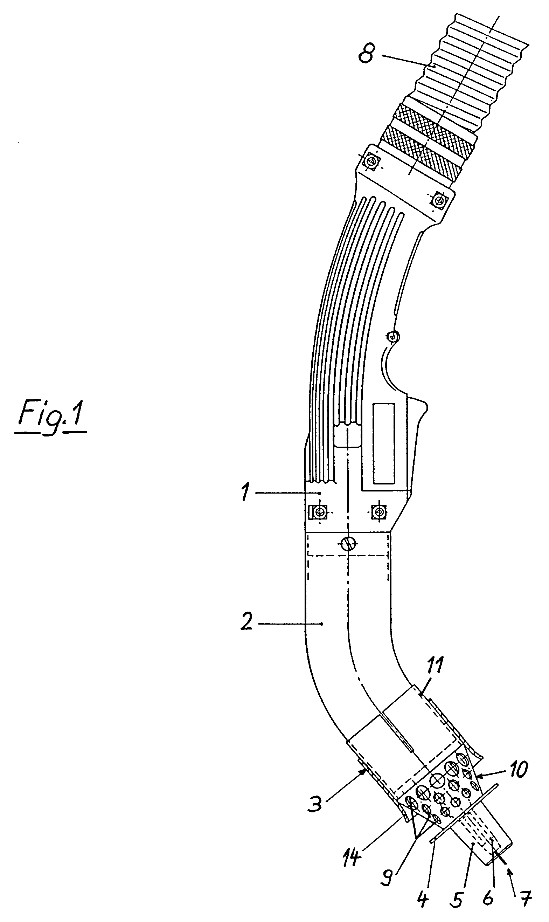

Der in Figur 1 gezeigte Absaugbrenner besteht aus Handgriff 1, Brennerbogen und Gasdüse 5, die von einem Saugrohr 2 umgeben sind. Durch eine Kontaktdüse 6 wird in herkömmlicher Weise ein Schweissdraht 7 zugeführt, der die Elektrode bildet. Durch die Gasdüse wird das für die Schweissung erforderliche Schutzgas zugeführt. Die Rauchgasabsaugung erfolgt über einen Spiralschlauch 8, durch den Handgriff 1, das Saugrohr 2 und eine Absaugdüse 3.

Die erfindungsgemässe Absaugung erfolgt nun durch eine besonders ausgebildet Absaugdüse 3, die am vorderen Ende der Gasdüse 5 verstellbar angebracht ist.

Die Absaugdüse 3 ist so gestaltet, dass der im Inneren befindliche zylindrische Teil 13 die Gasdüse 5 umschliesst, womit uach bei hoher Absaugleistung die Schutzgaszuführung nicht gestört wird.

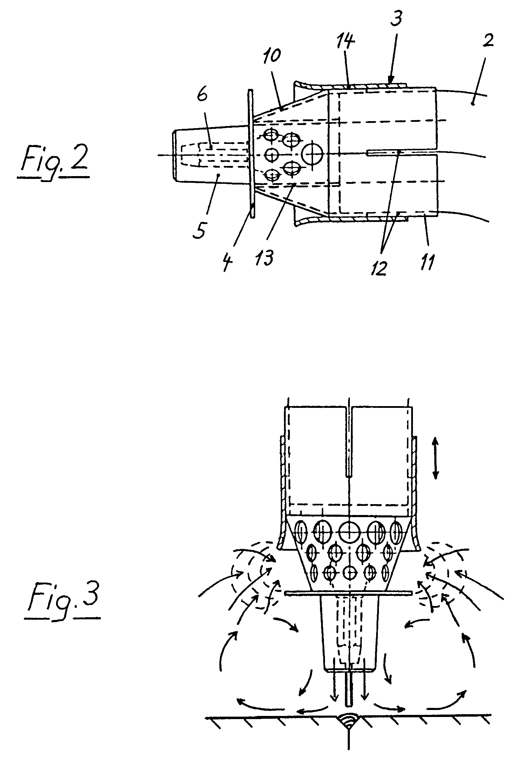

Die Absaugdüse besitzt dazu einen ringförmigen Vorsprung 4, hinter welchem Absaugöffnungen 9 so angeordnet sind, dass eine sich etwa radial ausgerichtete Drucksenke hinter dem Vorsprung 4 ergibt (vergl. Figur 3). Diese Drucksenke kann, wie im beschriebenen Ausführungsbeispiel, als konisch zusammenlaufendes Lochblech 10 ausgebildet sein, wobei die Absaugöffnungen durch die Löcher 9 im Lochblech 10 gebildet sind. Die Lochgrösse nimmt dabei gegen den ringförmigen Vorsprung 4 hin ab, während weiter hinten grössere Löcher angeordnet sind. Deren Saugwirkung kann mittels einer Regulierhülse 14 beeinflusst werden, welche bezüglich dem radialen Vorsprung 4 verschiebbar ist. Die Regulierdüse 14 bildet damit die hintere Begrenzung der Drucksenke, während die vordere Begrenzung durch den radialen Vorsprung 4 gebildet ist. Wird die Regulierhülse vorgeschoben, so erhöht sich die Strömungsgeschwindigkeit der Absaugung, womit die radiale Wirkung der Absaugung erhöht wird. Je nach der Lage des Schweissbrenners kann damit die Absaugungscharakteristik verstellt werden.

Der Vorsprung 4 wirkt als Stauring, der verhindert, dass sich die Absaugung auf die Schweissstelle selbst auswirkt. Wie sich beobachten lässt bewirkt er, wie in Figur 3 schematisch dargestellt, eine Wirbelwirkung seitlich von der Gasdüse 5, worin sich der Rauch sammelt. Wie ebenfalls in Figur 3 angedeutet ist, zeigt die Praxis, dass der Rauch aus diesem Wirbel über den Vorsprung 4 abgesaugt wird und sich nicht ausbreitet. Damit lässt sich ohne Störung der Schutzgaswirkung eine umfassende Absaugung des Rauchs erzielen.

Die konstruktive Ausgestaltung der Absaugdüse ergibt sich aus Figur 2. Sie besitzt ein Aussenrohr 11, das sich auf das Saugrohr 2 aufschieben lässt und dazu mit Längsschlitzen 12 versehen ist. An dieses Aussenrohr schliesst sich ein konischer, als Lochblech ausgebildeter Rohrteil 10 an. Dessen vorderes Ende trägt den ringförmigen Vorsprung bzw. Stauring 4 sowie ein Innenrohr 13, das an der Gasdüse 5 anliegt und die Absaugdüse darauf zentriert. Ueber dem Ganzen sitzt die Regulierdüse 14, welche als geschlitzte Hülse federnd auf dem Aussenrohr 11 sitzt und darauf verschiebbar ist.

Die Absaugdürse kann als Einheit ausgebildet sein, die sich nachträglich an Schweissbrennern des entsprechendne Typs anbringen lässt.

Insgesamt ergibt sich durch die beschriebenen Massnahmen eine wesentliche Verbesserung der Arbeitshygiene beim MIG-Schweissen. Dabei wird der Schweissvorgang selbst, noch die Arbeitsweise des Schweissers beeinträchtigt.

**Patentansprüche**

1. Rauchabsaugvorrichtung an einem Schweissbrenner für das Lichtbogenschweissen unter Schutzgas, wobei der Schweissbrenner ein zentrales Führungsorgan (6) für einen Schweissdraht (7) aufweist, das an seinem vorderen Ende von einer Gasdüse (5) umgeben ist, durch welche die Schutzgaszuführung erfolgt und wobei über der Gasdüse (5) eine Absaugung (2) zum Wegführen von Rauch aus dem Bereich der Schweissstelle vorgesehen ist, dadurch gekennzeichnet, dass die Absaugung (2) mit Luftführungsmitteln (4,9,14) versehen ist, welche im Abstand vom vorderen Ende der Gasdüse (5) eine mit radialer Komponente wirkende Drucksenke definieren.

2. Rauchgasabsaugvorrichtung nach Anspruch 1, dadurch gekennzeichnet, dass die Luftführungsmittel (4,9, 14) einen ringförmigen Vorsprung (4) an der Gasdüse (5) aufweisen, hinter welchem die Drucksenke ausgebildet ist.

3. Rauchabsaugvorrichtung nach Anspruch 2, dadurch gekennzeichnet, dass die Absaugung ein im wesentlichen koaxial zur Gasdüse angeordnetes Saugrohr (2) aufweist, das an seinem vorderen Ende eine die Drucksenke bildende Absaugdüse (3) besitzt.

4. Rauchabsaugvorrichtung nach Anspruch 3, dadurch gekennzeichnet, dass die Absaugdüse (3) mindestens eine unmittelbar hinter dem ringförmigen Vorsprung (4) liegende, als Drucksenke wirkende Oeffnung (9) bildet.

5. Rauchabsaugvorrichtung nach einem der Ansprüche 3 oder 4, dadurch gekennzeichnet, dass die Absaugdüse (3) als ein sich im wesentlichen bis zum ringförmigen Vorsprung erstreckendes Rohrstück (10) mit verteilt daran angeordneten Oeffnungen (9) ausgebildet ist.

6. Rauchabsaugvorrichtung nach einem der Ansprüche 3 bis 5, dadurch gekennzeichnet, dass die Absaugdüse (3) eine auf dem Saugrohr verschiebbare Regulierhülse (14) aufweist, deren vorderes Ende die Drucksenke begrenzt und gegenüber dem ringförmigen Vorsprung (14) verstellbar ist.

7. Rauchabsaugvorrichtung nach einem der Ansprüche 3 bis 6, dadurch gekennzeichnet, dass die Absaugdüse (3) als Verlängerung des Saugrohres (2) zum ringförmigen Vorsprung (4) ausgebildet ist.

8. Rauchabsaugvorrichtung nach Anspruch 7, dadurch gekennzeichnet, dass der ringförmige Vorsprung (4) an der Absaugdüse (3) angeordnet und diese auf der Gasdüse (5) des Schweissbrenners aufsteckbar ist.

9. Rauchabsaugvorrichtung nach einem der vorangehenden Ansprüche, dadurch gekennzeichnet, dass der ringförmige Vorsprung (4) als Scheibe ausgebildet ist, deren Durchmesser nicht grösser als der Druchmesser des Saugrohres (2) ist.

10. Rauchabsaugvorrichtung nach einem der Ansprüche 1 bis 8, dadurch gekennzeichnet, dass die Absaugdüse (3) als kegelförmig zulaufendes Rohrstück (10) mit über der Kegelfläche verteilt angeordneten Oeffnungen (9) ausgebildet ist.

11. Rauchabsaugvorrichtung nach einem der Ansprüche 4 oder 9, dadurch gekennzeichnet, dass die Grösse der Oeffnungen (9) gegen den ringförmigen Vorsprung (4) hin abnimmt.

EP 0 502 421 A2

Fig.1

4

_Fig. 2_

_Fig. 3_